Europäisches Patentamt

(19) European Patent Office    (11) Publication number:    **0 152 534**
Office européen des brevets                           **B1**

(12) **EUROPEAN PATENT SPECIFICATION**

(45) Date of publication of patent specification: **02.08.89**    (51) Int. Cl.⁴: **A 47 G 19/32, A 47 J 47/02**

(21) Application number: **84112719.4**

(22) Date of filing: **22.10.84**

(54) **A dispenser.**

(30) Priority: **17.02.84 US 581490**

(43) Date of publication of application:
**28.08.85 Bulletin 85/35**

(45) Publication of the grant of the patent:
**02.08.89 Bulletin 89/31**

(84) Designated Contracting States:
**AT BE CH DE FR GB IT LI LU NL SE**

(56) References cited:
**DE-B-2 051 168**

**"Taiwan International Trade", August 1980**

(73) Proprietor: **DART INDUSTRIES INC.**
**2211 Sanders Road**
**Northbrook, IL 60062 (US)**

(72) Inventor: **Conti, Rino**
**605 School Street**
**Stoughton Massachusetts 02072 (US)**
Inventor: **Trivison, Jody A.**
**1936 Highland Park**
**Wooster Ohio 44691 (US)**

(74) Representative: **Howden, Christopher Andrew**
**et al**
**FORRESTER & BOEHMERT Widenmayerstrasse**
**4/I**
**D-8000 München 22 (DE)**

Courier Press, Leamington Spa, England.

## Description

It is common practice to store materials in bulk in a container and, periodically, to dispense portions of the material from the container. For example, in many households, tea leaves or coffee grounds are kept, and are dispensed in relatively small quantities to brew one or a few cups of beverage. As a measured amount of leaves or grounds is needed for proper proportioning, an intermediate dispensing container is typically used to measure and transfer a desired quantity of material from the storage container to the brewing apparatus. Such intermediate containers have included measuring cups and spoons.

It is known in the prior art to provide containers for granular or liquid materials, such as grounds, detergents or medicaments with necked cylindrical spouts and caps wherein the cap is removed and inverted to serve as a measuring container. Examples of such closure arrangements are disclosed in US—A—2840124; US—A—2842167 and US—A—3259279. It is also known from US—A—D—199461 to provide a cylindrical dispensing cup which, when inverted, slips over the top and upper extent of a cylindrical, capped bottle.

It is known also from the prior art (e.g. the publication "Taiwan International Trade", of August 1980) to provide a dispenser comprising a container having an upright peripheral wall terminating in a top rim which circumscribes an upwardly opening wide container mouth, the container further having a container spout including an outwardly projecting portion of said wall and two upright outwardly directed wall extensions bounding a U-shaped container spout opening formed in the upper extent of said wall, the dispenser including a cover adapted to be received over the mouth of the container and having a downwardly opening circumferential skirt terminating in a bottom edge, the skirt having a projecting portion for covering the container spout opening.

While known containers may be suitable for pouring and measuring their contents, they have been ill-adapted for being filled with granular or flaky material because of the restricted diameters of their openings. Materials of this consistency are difficult to direct in a concentrated flow without the use of a nozzle or funnel. While this problem may be prevented by using a wide-mouthed container, attempting to pour loose, particulate materials from a wide-mouthed container will usually result in the material pouring over a substantial portion of the container rim and spilling of some material outside of the intended receptacle.

Thus, there is a need for a container which is easy to fill, easy to pour from, and which incorporates a closure forming an intermediate receptacle which is also easy to pour from. Furthermore, it is desirable for the receptacle to provide a complete cover for the container.

An aim of the present invention is at least to mitigate the problems of prior art dispensers.

Accordingly, the invention provides a dispenser comprising a container having an upright peripheral wall terminating in a top rim which circumscribes an upwardly opening wide container mouth, the container further having a container spout including an outwardly projecting portion of said wall and two upright outwardly directed wall extensions bounding a U-shaped container spout opening formed in the upper extent of said wall, the dispenser including a cover adapted to be received over the mouth of the container and having a downwardly opening circumferential skirt terminating in a bottom edge, the skirt having a projecting portion for covering the container spout opening, characterised by said container wall extensions being triangular walls having outer edges sloping downwardly and outwardly from said top rim, and said projecting portion of said cover having an inverted spout comprising an outwardly sloping skirt portion and two upright, outwardly directed skirt extensions, said skirt extensions having outer edges sloping upwardly and outwardly from said skirt bottom edge, said skirt extensions bounding an inverted U-shaped spout opening formed in the lower extent of said skirt, said cover spout being complementary in shape to said container spout.

Particular embodiments of the invention are set out in dependent claims 2 to 5.

Thus, a dispenser of the invention provides the benefits of a widemouthed container with a spout opening formed in one side of the upper portion of the peripheral wall of the container and a similarly spouted cup-like cover complementary in shape to the upper extent of the container. The perimeter of the cover is slightly larger than the perimeter of the container so that the cover may slip over the top of the container and close both the mouth and the spout of the container.

The cover, when removed, may be inverted to provide a spouted cup to enable a desired quantity of the container contents to be neatly poured through the container spout into the cover. The material may subsequently be neatly poured from the cover through the cover spout into a desired receptacle. In this manner, the invention combines the advantages of a wide-mouthed container for filling, a spouted container for pouring, and a dual purpose cover/dispensing cup. By virtue of these features, a dispenser of the invention is well-suited for use with tea leaves, coffee grounds and other loose materials.

Desirably, the spouts of both the container and cover comprise outwardly sloping portions of their peripheral walls and generally triangular spout side walls spanning from the peripheral walls to the sloping wall portions. In position over the container, the sloping wall portion of the cover closes the spout opening of the container, the triangular side walls of the cover overlie the triangular side walls of the container, and the peripheral wall or skirt of the cover surrounds the rim of the container.

Preferably, the cover is provided with a volume indicating means, for example, comprising an inner circumferential shoulder. The shoulder rests atop the rim of the container when the container is closed. When the cover is inverted, the shoulder forms a horizontal line that indicates a predetermined volume.

The container may also be provided with a secondary closure, which may comprise a three-part press type seal having a depressable plunger and a distortable contractable sealing wall (such a closure is described in US—A—3,756,480). The secondary closure seats atop a ledge formed about the inner circumference of the container disposed slightly below the container spout. This secondary closure provides added capability for preserving the freshness of the container contents.

In order that the invention may be more readily understood, and so that further features thereof may be appreciated, embodiments of dispensers embodying the invention will now be described, by way of example, with reference to the accompanying drawings, in which:

FIGURE 1 is a perspective view of a closed container and cover combination embodying a dispenser of the invention;

FIGURE 2 is a perspective view of the container and cover of Figure 1, separated and in position for pouring material from the container into the inverted cover;

FIGURE 3 is a side view of the cover of Figure 1;

FIGURE 4 is a front view of the cover of Figure 1;

FIGURE 5 is a bottom, inside view of the cover of Figure 1;

FIGURE 6 is a side sectional view taken along the line 6—6 of Figure 5;

FIGURE 7 is a side view of the container of Figure 1;

FIGURE 8 is a front view of the container of Figure 1;

FIGURE 9 is a top view of the container of Figure 1;

FIGURE 10 is a side sectional view taken along the line 10—10 of Figure 8;

FIGURE 11 is a side sectional view taken through line 11—11 of Figure 1;

FIGURE 12 is a perspective view of a container and cover combination similar to that shown in Figure 1 but also including a secondary closure; and

FIGURE 13 is a side partially sectional view taken substantially along the line 13—13 of Figure 12.

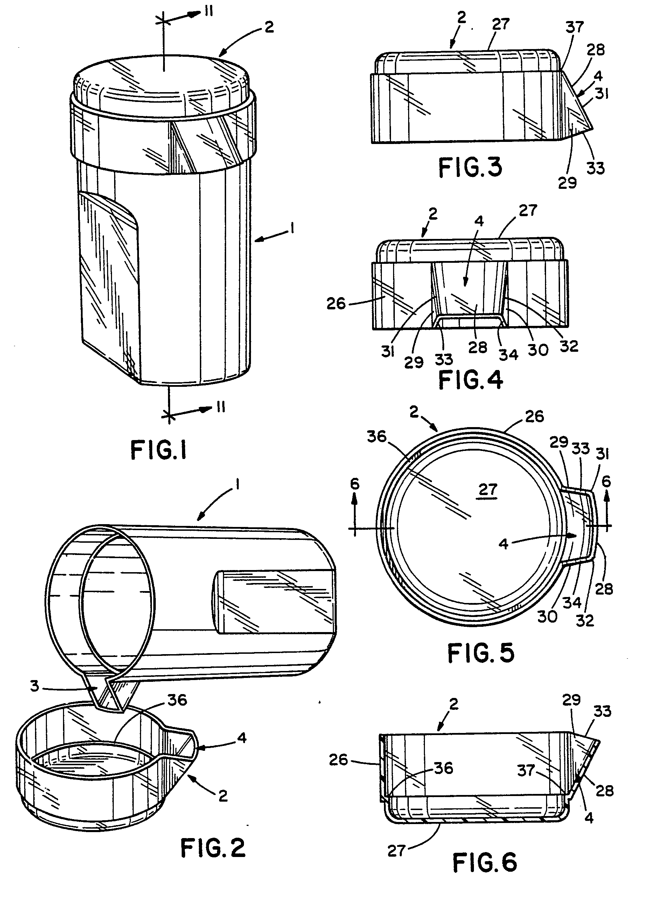

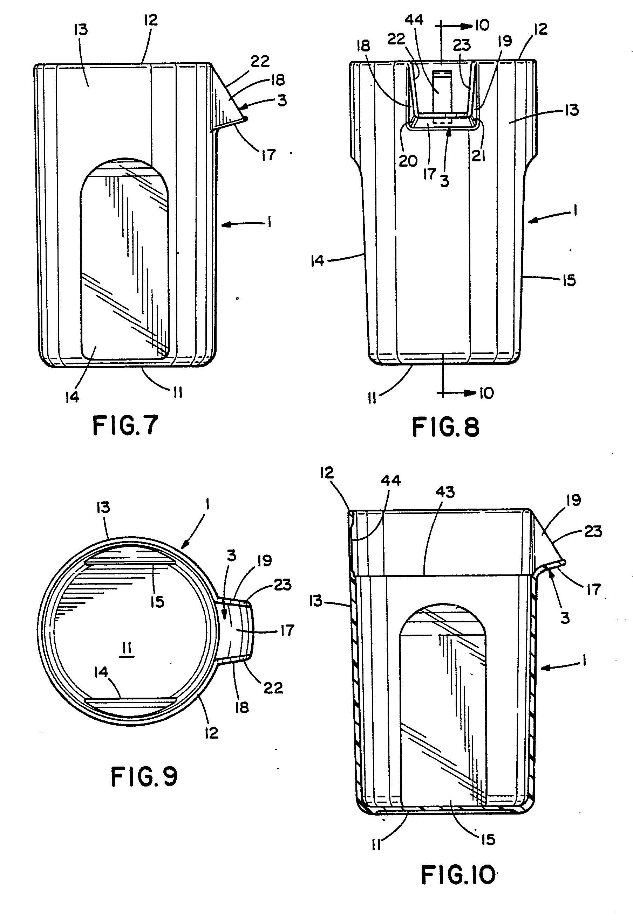

As shown in Figure 1, a dispenser of the invention comprises, in combination, a container 1 and a cover 2. As best illustrated in Figures 7 to 10, the container 1 is generally cylindrical, having a flat bottom wall 11, connected with a side wall 13 that opens at a wide, generally circular, top mouth opening circumscribed by a container rim 12. The container side wall 13 is cylindrical in its upper extent and is interrupted by flat, opposed side panels 14, 15 in its lower extent.

A U-shaped notch is formed in the upper extent of the container wall 13, to provide a container spout 3. The spout 3 is bounded on its lower side by an outwardly projecting sloping portion 17 of the container wall and on its upright sides by two triangular wall extensions 18, 19 that extend convergingly outwardly and downwardly to merge with the sloping portion 17 along edges 20, 21 and to present sloping outer edges 22, 23.

The cover 2, best shown in Figures 3 to 6, has a circumferential, cylindrical skirt 26 and a generally flat top 27. In a fashion similar to the container 1, the cover 2 has a U-shaped notch formed in the skirt 26 to form a cover spout 4 that is bounded by an outwardly sloping portion 28 of the skirt 26 and two triangular skirt extensions 29, 30 that extend convergingly outwardly to merge with the sloping portion 28 along eges 31, 32, and to present sloping outer edges 33, 34. A circumferential shoulder 36 is formed about the inside of the skirt 26 disposed at a juncture 37 of the sloping portion 28 with the skirt 26.

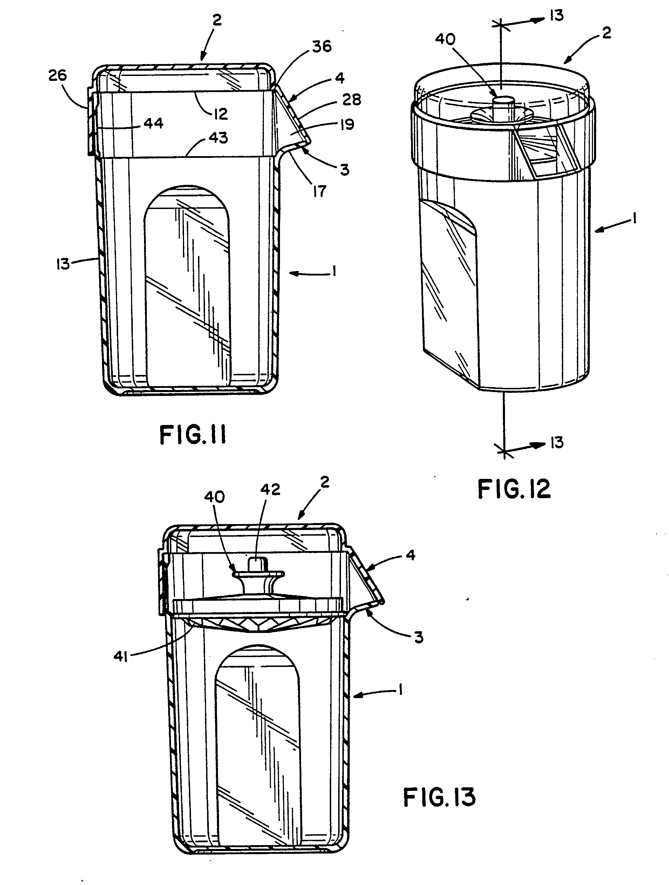

The slope and length of the cover skirt portion 28 and the cover edges 31, 32 is identical to the slope and length of the container spout edges 22, 23. The inner diameter of the cover skirt 26 is slightly greater than the outer diameter of the container wall 13. The inner width between the cover skirt extensions 29, 30 is slightly greater than the outer width between container wall extensions 18, 19. The cover spout 4 is thus complementary in shape to the container spout 3. Given this construction, the cover will slip over the container, as shown in Figures 1 and 11, closing both the container mouth and container spout opening, with the shoulder 36 resting atop the container rim 12.

When the container 1 and the cover 2 are separated, as illustrated in Figure 2, a desired amount of the contents of the container 1 may be poured through the container spout 3 into the inverted cover 2. Subsequently, the contents of the cover 2 may be poured through cover spout 4. To facilitate precise measurement, the volume defined between cover shoulder 36 and the inside of the cover bottom 27 may be selected as a predetermined standard. The shoulder 36 will then service as a visible indicator for dispensing the desired volume. Alternatively an appropriate scale may be marked on the cover to indicate the amount dispensed.

As shown in Figures 12 and 13, the container may be provided with a secondary closure 40 comprising a three-part press-type seal, for example one constructed in accordance with the teaching of US—A—3,756,480. The secondary closure includes a distortable seal 41 that may selectively be contracted or distended by depressing or releasing a central plunger 42. Referring also to Figure 10, an inner circumferential ledge 43 is formed about the container wall 13 disposed below the spout 3 upon which ledge the edge of the seal 41 may be seated. A depressed groove 44 in the inner surface of the container wall 13 above the ledge 43 may also be provided to allow air to enter and escape when the secondary closure 40 is removed and inserted.

In a preferred embodiment, all parts of the dispenser are made of a moulded plastics material. It is desirable for the container and particularly the cover, to be transparent or translucent so that the contents may be seen.

## Claims

1. A dispenser comprising a container (1) having an upright peripheral wall (13) terminating in a top rim (12) which circumscribes an upwardly opening wide container mouth, the container (1) further having a container spout (3) including an outwardly projecting portion (17) of said wall (13) and two upright outwardly directed wall extensions (18, 19) bounding a U-shaped container spout opening formed in the upper extent of said wall (13), the dispenser including a cover (2) adapted to be received over the mouth of the container (1) and having a downwardly opening circumferential skirt (26) terminating in a bottom edge, the skirt (26) having a projecting portion (4) for covering the container spout opening, characterised by said container wall extensions (18, 19) being triangular walls having outer edges (22, 23) sloping downwardly and outwardly from the top rim (12), and said projecting portion (4) of said cover (2) having an inverted spout comprising an outwardly sloping skirt portion (28) and two upright, outwardly directed skirt extensions (29, 30), said skirt extensions (29, 30) having outer edges (33, 34) sloping upwardly and outwardly from said skirt bottom edge, said skirt extensions (29, 30) bounding an inverted U-shaped spout opening formed in the lower extent of said skirt (26), said cover spout (4) being complementary in shape to said container spout (3).

2. A dispenser according to claim 1 wherein said cover (2) further comprises a cover bottom (27) extending above said skirt (26) and a circumferential shoulder (36) disposed between said cover bottom (27) and said skirt (26) for resting atop said container rim (12), the volume of the interior of said cover bottom (27) above said shoulder (36) being predetermined for measuring a desired volume of material dispensed from said container (1).

3. A dispenser according to claim 2 further comprising secondary closure means (40) disposed within said container (1), said secondary closure means (40) comprising a three-part press type seal seatable upon a ledge (43) formed about the inner circumference of said container wall (13) disposed below said container spout opening (3).

4. A dispenser according to any of claims 1 to 3, wherein said container peripheral wall (13) and said cover circumferential skirt (26) are substantially cylindrical.

5. A dispenser according to claim 4, wherein the inner diameter of said cover skirt (26) is slightly greater than the outer diameter of said container peripheral wall (13).

## Patentansprüche

1. Dispenser, bestehend aus einem Behälter (1) mit einer aufrechten, senkrechten Wandung (13), die in einen oberen, eine nach oben gerichtete Öffnung des Behälters umschreibenden Rand ausläuft, wobei der Behälter (1) weiter mit einem Behälterausgießer (3) versehen ist, der einen nach außen vorspringenden Abschnitt (17) der Seitenwandung (13) und zwei aufrechte, nach außen gerichtete Wanderstreckungen (18, 19), die eine in einer oberen Erstreckung der Seitenwand (13) auslaufende, U-förmige Behälterausgießöffnung begrenzen, und mit einem Deckel (2), der zum Aufsetzen über die Öffnung des Behälters (1) eingerichtet ist und eine sich nach unten öffnende, in eine Bodenkante auslaufende, umlaufende Schürze (26) hat, wobei die Schürze (26) einen vorspringenden Abschnitt (4) zum Abdecken des Behälterausgießers aufweist, dadurch gekennzeichnet, daß die Erstreckungen (18, 19) der Behälterwandung dreieckige Wandungen mit äußeren Kanten (22, 23) sind, die sich nach unten und außen von dem oberen Rand (12) erstrecken, und der vorspringende Abschnitt (4) des Deckels (2) einen invertierten Ausgießer hat, der mit einem nach außen schrägen verlaufenden Schürzenabschnitt (28) und zwei aufrechten, nach außen gerichteten Schürzenerstreckungen (29, 30) versehen ist, wobei die Schürzenerstreckungen (29, 30) äußere Kanten (33, 34) haben, die sich nach oben und außen von der Bodenkante der Schurze erstrecken, und wobei die Schürzenerstreckungen (29, 30) einen invertierten, U-förmigen Ausgießer begrenzen, der in der unteren Erstreckung der Schürze (26) ausgebildet ist, und wobei der Deckelausgießer (4) in seiner Form zu derjenigen des Behälterusgießers (3) komplementär ist.

2. Dispenser nach Anspruch 1, wobei der Deckel (2) weiter einen Deckelboden (27), der sich oberhalb der Schürze (26) erstreckt, und eine zum Auflegen auf dem Rand (12) des Behälters dienende, umlaufende Schulter (26), die zwischen dem Deckelboden (27) und der Schürze (26) verläuft, aufweist, wobei das Volumen des Inneren des Deckelbodens (27) oberhalb der Schulter (36) zum Abmessen eines gewünschten Volumens des von dem Behälter (1) abgegebenen Materials vorgegeben ist.

3. Dispenser nach Anspruch 2, weiter mit einem Sekundärverschluß (40), der in dem Behälter (1) angeordnet ist, wobei der Sekundärverschluß (40) eine dreiteilige Dichtung vom Drucktyp aufweist, die auf einer Stufe (43) rhut, die um den inneren Umfang der Behälterwandung (13) unterhalb des Behälterausgießers angeordnet ist.

4. Dispenser nach einem der Ansprüche 1 bis 3, wobei die Umfangswandung (13) des Behälters und die umlaufende Schürze (26) des Deckels im wesentlichen zylindrisch sind.

5. Dispenser nach Anspruch 4, wobei der Innendurchmesser der Schürze (26) des Deckels etwas größer ist als der Außendurchmesser der Umfangswandung (13) des Behälters.

## Revendications

1. Distributeur contenant un récipient (1) muni d'une paroi périphérique verticale (13) aboutissant sur un rebord supérieur (12) qui circonscrit une large ouverture de récipient s'ouvrant vers le haut, le récipient (1) comportant de plus un bec (3) comprenant und portion en saillie vers l'extérieur (17) de la paroi (13) et deux prolongements de paroi dirigés vers l'extérieur (18, 19) limitrophes d'une ouverture de bec en forme de "U" formée dans la partie supérieure de cette paroi (13), le distributeur comprenant un couvercle (2) apte à être reçu sur l'embouchure du récipient (1) et comportant une jupe périphérique s'ouvrant vers le bas (26) aboutissant sur un bord inférieur, la jupe (26) comportant une portion en saillie (4) destinée à recouvrir l'ouverture du bec du récipient, distributeur caractérisé en ce que les prolongements de paroi du récipient (18, 19) sont des parois triangulaires comportant des bords extérieurs (22, 23) s'inclinant vers le bas et vers l'extérieur à partir du bord supérieur (12) et cette portion en saillie (4) du couvercle présentant un bec inversé comprenant une portion de jupe s'inclinant vers l'extérieur (28) et deux prolongements de jupe verticaux dirigés vers l'extérieur (29, 30), ces prolongements de jupe (29, 30) présentant des bords extérieurs (33, 34) s'inclinant vers le haut et vers l'extérieur à partir du bord inférieur de jupe, ces prolongements de jupe (29, 30) étant limitrophes d'une ouverture de bec en forme de "U" inversé formée dans la partie inférieure de la jupe (26), ce bec de couvercle (4) étant de configuration complémentaire au bec du récipient (3).

2. Distributeur selon la revendication 1, dans lequel le couvercle (2) comprend de plus un fond de couvercle (27) s'étendant au-dessus de la jupe (26) et un épaulement circonférenciel (36) disposé entre le fond du couvercle (27) et cette jupe (26) apte à reposer au-dessus du rebord (12) du récipient, le volume de l'intérieur de ce fond de couvercle (27) au-dessus de l'épaulement (36) étant prédéterminé pour mesurer un volume souhaité de matière distribuée par le récipient (1).

3. Distributeur selon la revendication 2 comprenant de plus des moyens de fermeture secondaire (40) disposés à l'intérieur du récipient (1), ces moyens de fermeture secondaire (40) comprenant un joint d'étanchéité de type pression en trois parties pouvant être logé sur un rebord (43) formé sur la circonférence intérieure de la paroi de récipient (13) diposé au-dessous de l'ouverture du bec de récipient (3).

4. Distributeur selon l'une quelconque des revendications 1 à 3, dans lequel la paroi périphérique du récipient (13) et la jupe circonférencielle du couvercle (26) sont sensiblement cylindriques.

5. Distributeur selon la revendication 4, dans lequel le diamètre intérieur de la jupe de couvercle (26) est légèrement supérieur au diamètre extérieur de cette paroi périphérique de récipient (13).

EP 0 152 534 B1

FIG.1

FIG.2

FIG.3

FIG.4

FIG.5

FIG.6

FIG.7

FIG.8

FIG.9

FIG.10

**FIG.11**

**FIG.12**

**FIG.13**